# EUROPEAN PATENT APPLICATION

(11) **EP 4 261 788 A1**
(43) Date of publication of application: **18.10.2023**
(21) Application number: 23165131.6
(22) Date of filing: 29.03.2023
(51) Int. Cl.: G06T 15/02, G06T 15/20, G06T 19/20

(54) **IMAGE PROCESSING APPARATUS, IMAGE PROCESSING METHOD, AND PROGRAM**

(30) Priority: 13.04.2022 JP 2022066605
(71) Applicant: CANON KABUSHIKI KAISHA, Tokyo 146-8501 (JP)
(72) Inventor: OGASAWARA, Taku, Tokyo, 146-8501 (JP)
(74) Representative: TBK

(57) **Abstract**

In a virtual viewpoint image, visual effects for an object are appended appropriately. Based on shape data indicating a three-dimensional shape of a foreground object captured in a plurality of images which are based on image capturing of a plurality of imaging devices, effects data indicating three-dimensional visual effects in accordance with a specific portion in the three-dimensional shape is generated (203). Then, by using the shape data and the effects data, a virtual viewpoint image corresponding to a virtual viewpoint is generated (205).

## Description

### BACKGROUND

### Field

The present disclosure relates to visual effects for three-dimensional shape data of an object.

### Description of the Related Art

In recent years, a technique has been spreading, called visual effects (VFX), which appends special effects, such as light that cannot be seen in actuality, in video works, such as a movie and drama. The visual effects are performed by modifying an actually captured video by using computer graphics, image combination processing and the like and a variety of techniques relating to the visual effects are made public. Japanese Patent Laid-Open No. 2021-23401 has disclosed a technique to append, as visual effects, the locus of a ball in the shape of a wave by extracting the features of the ball from a captured image taking the play of table tennis as a target. In addition, it has also been disclosed that based on the logo attached to the ball, the number of rotations and the rotation direction of the ball are analyzed and the numerical values thereof are appended to the captured image as the visual effects.

On the other hand, a technique has been attracting attention, which generates an image (virtual viewpoint image) representing an appearance from a virtual viewpoint by arranging a plurality of imaging devices at different points to perform synchronous image capturing and using a plurality of obtained captured images. Generation of the virtual viewpoint image is implemented by generating three-dimensional shape data of an object and performing processing, such as rendering based on the virtual viewpoint.

In the technique of Japanese Patent Laid-Open No. 2021-23401 described above, based on results of two-dimensionally analyzing an object captured in a two-dimensional captured image, the locus of movement or the like is appended onto the captured image as visual effects. Because of this, for example, even in a case where an attempt is made to append visual effects in accordance with a specific region or orientation of a person in a virtual viewpoint image generated in accordance with a virtual viewpoint that is set within a three-dimensional virtual space, it is not possible to deal with the attempt by the technique of Japanese Patent Laid-Open No. 2021-23401 described above.

### SUMMARY

The present disclosure in its first aspect provides an image processing apparatus as specified in claims 1 to 13. The present disclosure in its second aspect provides an image processing method as specified in claim 14. The present disclosure in its third aspect provides a program as specified in claim 15.

Further features of the present disclosure will become apparent from the following description of exemplary embodiments with reference to the attached drawings.

### BRIEF DESCRIPTION OF THE DRAWINGS

FIG. 1A is a diagram showing a configuration example of an image processing system and FIG. 1B is a diagram showing an installation example of a plurality of sensor system;
FIG. 2A is a block diagram showing a function configuration of an image processing terminal and FIG. 2B is a diagram showing a hardware configuration of the image processing terminal;
FIG. 3A to FIG. 3E are diagrams explaining a data structure of a foreground model;
FIG. 4A to FIG. 4D are diagrams explaining virtual viewpoint information;
FIG. 5 is a flowchart of processing to generate a virtual viewpoint image with visual effects;
FIG. 6A is a diagram explaining a condition setting of visual effects, FIG. 6B is a diagram explaining extraction of shape data corresponding to a specific region, FIG. 6C is a diagram showing an example of a visual effects model, and FIG. 6D is a diagram showing an example of a virtual viewpoint image to which visual effects are appended;
FIG. 7A to FIG. 7C are diagrams explaining a condition setting of visual effects, FIG. 7D is a diagram explaining extraction of shape data corresponding to a specific region, and FIG. 7E and FIG. 7F are each a diagram showing an example of a visual effects model;
FIG. 8A and FIG. 8B are diagrams explaining a condition setting of visual effects and FIG. 8C is a diagram showing an example of a visual effects model; and
FIG. 9A and FIG. 9B are diagrams explaining a condition setting of visual effects and FIG. 9C and FIG. 9D are each a diagram showing an example of a visual effects model.

### DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically.

In the following, preferred embodiments of the present disclosure are explained in detail with reference to the drawings. The following embodiments are not intended to limit the present disclosure and all combinations of features explained in the present embodiments are not necessarily indispensable to the solution of the present disclosure. In the present specification, the virtual viewpoint image is an image that is generated by a user and/or a dedicated operator or the like freely operating the position and orientation of a virtual camera in the image capturing space and also called a free-viewpoint image, an arbitrary viewpoint image and the like. In this case, the virtual camera means a virtual imaging device that does not exist actually in the image capturing space and is distinguished from an imaging device (actual camera) that exists in the image capturing space. Further, unless specified particularly, explanation is given by assuming that the term image includes both concepts of a moving image and a still image.

### [First Embodiment]

### (System configuration)

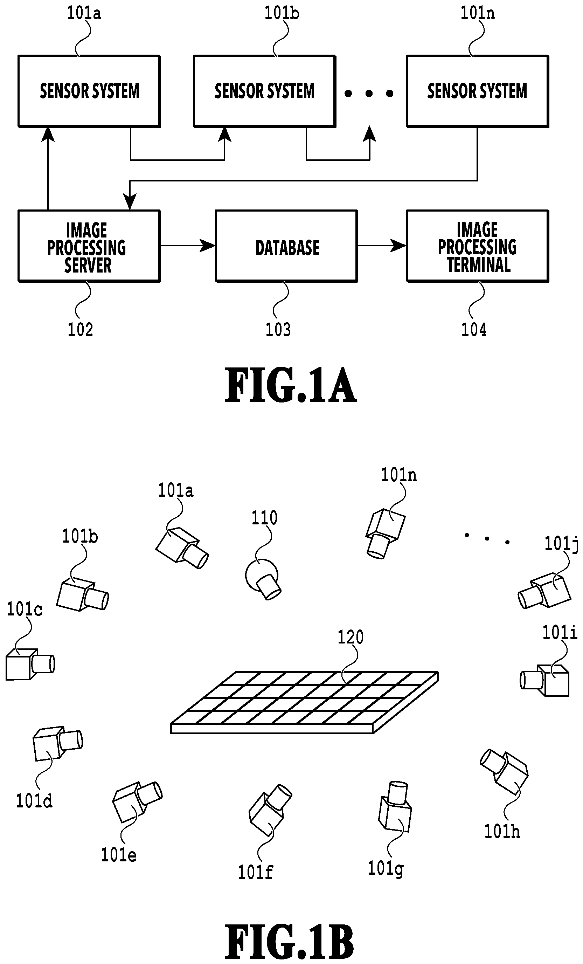

First, an outline of an image processing system 100 that generates a virtual viewpoint image in the present embodiment is explained. FIG. 1A is a block diagram showing a configuration example of the image processing system 100. The image processing system 100 has n sensor systems 101a to 101n, an image processing server 102, a database 103, and an image processing terminal 104.

Each of the sensor systems 101a to 101n has at least one imaging device (camera). In the following explanation, the n sensor systems 101a to 101n are described together as a "plurality of sensor systems 101". FIG. 1B is a diagram showing an installation example of the plurality of sensor systems 101. The plurality of sensor systems 101 is installed so as to surround a stage 120 on which an image capturing-target object exists and captures the object on the stage 120 from directions different from one another. The stage 120 is, for example, a stage provided within a arena in which a live or a show of an artist or performer is performed and in this case, the n (for example, 100) sensor systems 101 are installed so as to surround the stage from all the directions. The venue in which image capturing is performed may be an indoor studio, an outdoor stadium and the like. Further, the object is not limited to a person and for example, the object may a ball or the like, Furthermore, the plurality of sensor systems 101 may not be installed along the entire circumference of the stage 120 and for example, it may also be possible to install the plurality of sensor systems 101 only at part of the circumference of the stage 120 in accordance with physical restrictions resulting from, for example, the structure of the arena and the stage 120. Further, the respective cameras of the plurality of sensor systems 101 may include cameras whose specifications are different, for example, such as a telescope camera and a wide-angle camera. By synchronous image capturing by the plurality of cameras installed so as to surround the stage 120, the object existing on the stage 120 is captured from a variety of different directions. A plurality of images obtained by synchronous image capturing by the plurality of cameras as described above is called a "multi-viewpoint image" in the following. The multi-viewpoint image may be a set of captured images obtained by the plurality of sensor systems 101 or may be a set of images obtained by performing predetermined image processing, for example, such as processing to extract only a partial area from each captured image.

Each sensor system 101 may have a microphone (not show schematically) in addition to the camera. The microphone of each of the plurality of sensor systems 101 collects audio in synchronization. It may also be possible to generate an acoustic signal to be reproduced together with a virtual viewpoint image based on the collected audio data. In the following explanation, description of audio is omitted, but it is assumed that images and audio are basically processed together.

The image processing server 102 obtains data of a multi-viewpoint image from the plurality of sensor systems 101 and stores it in the database 103 along with time information (time code) on the time of the image capturing thereof. Here, the time code is information capable of specifying the time at which the image capturing is performed for each frame by a format, for example, such as "date: hour: minute: second, frame number". Further, the image processing server 102 generates three-dimensional shape data (3D model) of an object, which is a foreground in each captured image configuring the obtained multi-viewpoint image. Specifically, first, the image processing server 102 extracts the image area (foreground area) corresponding to the foreground object, such as a person and a ball, from each captured image and generates an image representing a silhouette of the foreground object (called "silhouette image" and "foreground image"). Then, based on a plurality of silhouette images thus obtained, the image processing server 102 generates a 3D model representing the three-dimensional shape of the foreground object by a set of unit elements (here, point cloud) for each object. For the generation of the 3D model such as this, it may be possible to use a publicly known shape estimation method, for example, such as Visual Hull. The data format of the 3D model is not limited to the above-described point cloud format and a voxel format that represents a three-dimensional shape by a set of minute cubes (voxels), a mesh format that represents a three-dimensional shape by a set of polygons, and the like may be accepted. In the following, the 3D model of a foreground object is described as "foreground model". The generated foreground model is stored in the database 103 in association with a time code.

The image processing terminal 104 obtains the multi-viewpoint image and the foreground model from the database 103 by designating a time code and generates a virtual viewpoint image. Prior to the generation of a virtual viewpoint image, the image processing terminal 104 generates three-dimensional shape data (3D model) for appropriately representing visual effects in a virtual viewpoint image based on the obtained multi-viewpoint image and foreground model. In the following, the 3D model for visual effects is described as "visual effects model" or "effects data". Details of the generation of a visual effects model will be described later.

It may also be possible for the image processing terminal 104 to perform the above-described generation of a foreground model. Further, it may also be possible to create in advance colored three-dimensional shape data (3D model) for a structure or the like, which is taken as a background (background object), such as a spectator stand, and store and retain it in an auxiliary storage device or the like, not shown schematically. In the following, the 3D model of a background object is described as "background model". It is sufficient to associate a time code, such as "00: 00: 00, 000", not representing a specific time, with time information on the background model. In the generation of a virtual viewpoint image, coloring based on color values of the corresponding pixel in the multi-viewpoint image is performed for each unit element (in the present embodiment, for each point configuring the point cloud) configuring the foreground model. Here, for a visual effects model representing light or the like that does not exist actually (that is, that cannot be captured) at the time of image capturing, it is not possible to obtain corresponding color information (texture information) from the multi-viewpoint image. Because of this, for example, color information on each point configuring a point cloud is determined in advance in association with the type of visual effects and coloring is performed based on this. Then, by arranging the colored foreground model, the visual effects model, and the colored background model in a three-dimensional virtual space and by rendering processing to project them onto a virtual cameral, a virtual viewpoint image is generated. In FIG. 1B described previously, a camera 110 indicates the virtual camera that is set within the three-dimensional virtual space associated with the stage 120 and it is possible to view the stage 120 from an arbitrary viewpoint different from any camera in the plurality of sensor systems 101. The virtual camera 110 is specified by its position and orientation. Details of the virtual camera 110 will be described later. The generated virtual viewpoint image is output to and displayed on a display, not shown schematically, connected to, for example, the image processing terminal 104. Alternatively, it may also be possible to transmit the generated virtual viewpoint image to an external mobile terminal and the like.

In the present embodiment, explanation is given by taking a case as an example where the virtual viewpoint image and the multi-viewpoint image that is the source of the virtual viewpoint image are both moving images, but they may be still images.

### (Function configuration of image processing terminal)

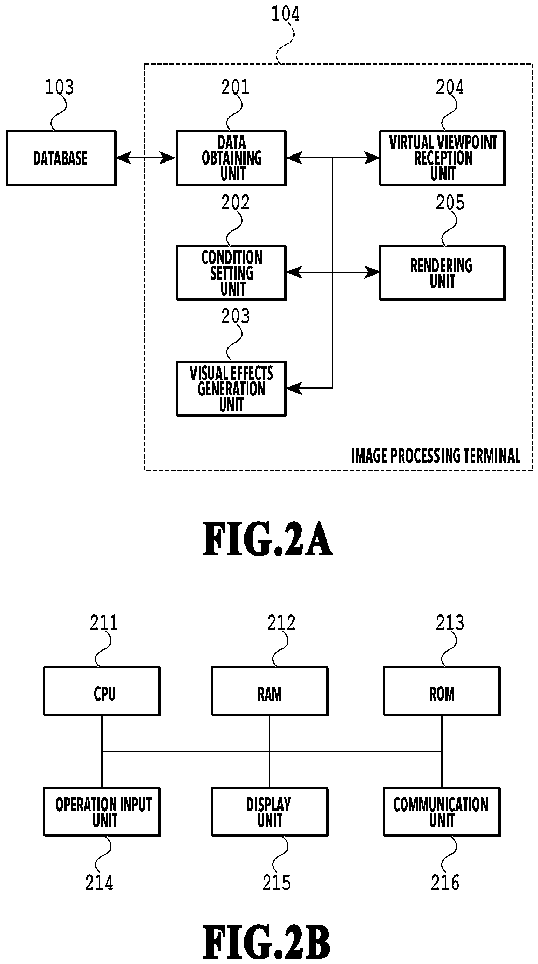

Following the above, the function configuration of the image processing terminal 104 according to the present embodiment is explained. FIG. 2A is a block diagram showing an example of the function configuration of the image processing terminal 104. The image processing terminal 104 has a data obtaining unit 201, a condition setting unit 202, a visual effects generation unit 203, a virtual viewpoint reception unit 204, and a rendering unit 205. In the following, the outline of each function of the image processing terminal 104 is explained.

The data obtaining unit 201 obtains a multi-viewpoint image and a foreground model necessary for generation of a virtual viewpoint image from the database 103 by designating a time code based on virtual viewpoint information, to be described later.

The condition setting unit 202 sets whether or not to append visual effects to the foreground model and sets a condition thereof in a case of appending visual effects based on user instructions and the like. Here, in the condition in a case where visual effects are appended, what (type of visual effects) is appended to which portion (region/area) of a target object to what extent (time, degree) and so on are included. For example, in a case where visual effects are appended to a certain person as a target, in the three-dimensional shape indicated by the foreground model thereof, first, a specific region configuring the human body, such as head and arm, is selected. Then, for example, the type of visual effects, such as "trace" representing a locus of the specific portion according to the selection, "lightning" and "star" representing virtual light on the periphery of the specified region, the time (for example, start frame and end frame) during which they are caused occur, and the like are designated. The "specific portion" is not limited to part of the three-dimensional shape represented by the foreground model and the "specific portion" may be the entire three-dimensional shape. Further, the target object is not limited to the foreground object in the multi-viewpoint image and it may also be possible to set the condition that causes visual effects to occur by taking the background object as a target. Details of the visual effects condition setting will be described later.

The visual effects generation unit 203 generates a visual effects model in accordance with the condition set by the condition setting unit 202. This visual effects model makes it possible to represent visual effects in which the appearance changes in a two-dimensional virtual viewpoint image in accordance with a change in the virtual viewpoint. Details of visual effects model generation processing will be described later.

The virtual viewpoint reception unit 204 receives information (virtual viewpoint information) specifying the position, orientation, camera path and the like of the virtual camera in the three-dimensional virtual space, corresponding to the image capturing space, from a virtual viewpoint setting device, not show schematically. The virtual viewpoint setting device is, for example, a three-axis controller, a tablet terminal and the like. A user sets virtual viewpoint information associated with the time code of the target multi-viewpoint image by operating the virtual camera on the UI screen displaying the virtual space, and so on, in the virtual viewpoint setting device. The virtual viewpoint information setting method is publicly known and not the main purpose of the technique of the present disclosure, and therefore, detailed explanation is omitted.

The rendering unit 205 generates a virtual viewpoint image by performing rendering processing using each 3D model of the foreground, background, and visual effects in accordance with the input virtual viewpoint information.

### (Hardware configuration of image processing terminal)

Next, the hardware configuration of the image processing terminal 104 is explained. FIG. 2B is a block diagram showing an example of the hardware configuration of the image processing terminal 104.

A CPU (Central Processing Unit) 211 is a central processing unit configured to control the operation of the entire image processing terminal 104. The CPU 211 implements each function shown in FIG. 2A by performing predetermined processing using programs and data stored in a RAM (Random Access Memory) 212 and a ROM (Read Only Memory) 213. The image processing terminal 104 nay have one or a plurality of pieces of dedicated hardware different from the CPU 211 and the dedicated hardware may perform at least part of the processing that is performed by the CPU 211. As examples of the dedicated hardware, there are an ASIC (Application Specific Integrated Circuit), an FPGA (Field Programmable Gate Array) and the like.

The ROM 213 is a read-only storage device storing programs and data. The RAM 212 is a main storage device temporarily storing programs and data that are read from the ROM 213 and provides a work area at the time of the CPU 211 performing each piece of processing.

An operation input unit 214 receives various operation instructions of a user via a keyboard, a mouse and the like. The operation input unit 214 may connect with an external controller, not shown schematically, and may receive information on the operation by a user via the external controller. As the external controller, for example, there is a joystick for setting a virtual viewpoint or the like.

A display unit 215 includes, for example, a liquid crystal display and is used to display a user interface screen for a user to perform various settings and a generated virtual viewpoint image, and so on. In a case where a touch panel is employed as the display unit 215, the configuration is such that the operation input unit 214 and the display unit 215 are integrated into one unit.

A communication unit 216 performs transmission and reception of information with the database 103 and an external device (mobile terminal and the like), not shown schematically, via, for example, LAN, WiFi and the like. For example, the communication unit 216 obtains a foreground model from the database 103, transmits data of a virtual viewpoint image to the external device, and so on. It may also be possible for the communication unit 216 to transmit data of a virtual viewpoint image to an external display device via an image output port, such as HDMI (registered trademark) and SDI.

### (Data structure of foreground model)

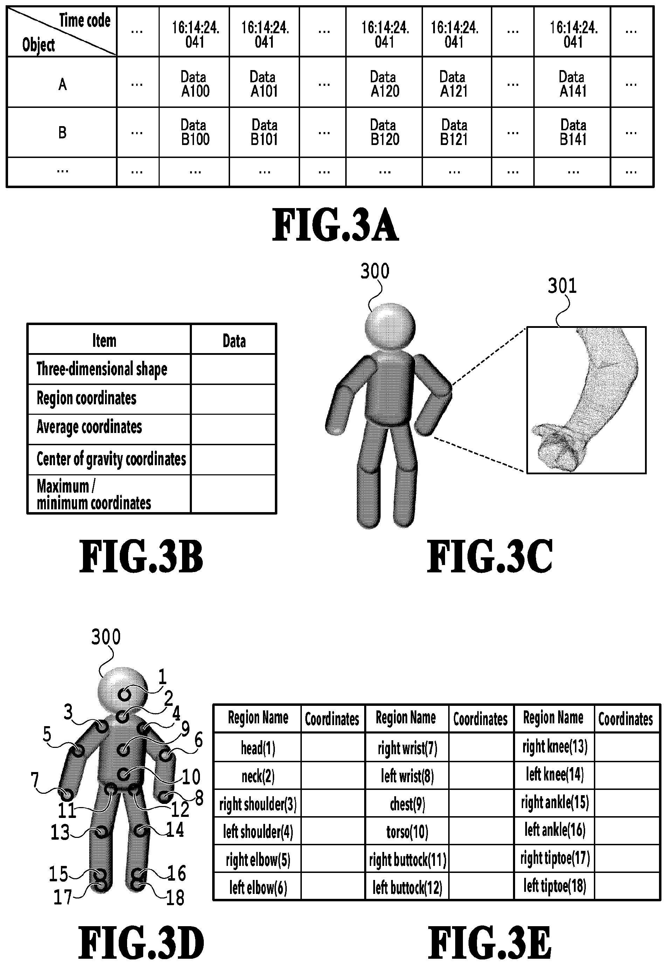

Following the above, the data structure of a foreground model that is stored in the database 103 is explained. FIG. 3A shows the data structure of a foreground model, which is generated by the image processing terminal 104, in a table format. In the table in FIG. 3A, in each column, all time codes during the image capturing period of time are arranged and in each row (record), data of a point cloud and the like representing the three-dimensional shape of each object (person, ball and the like) indicated by an uppercase alphabet letter is stored. The time code may be a partial time code during the image capturing period of time.

FIG. 3B shows the internal structure of data that is stored in each record. Each record consists of information, such as a point cloud representing the three-dimensional shape of the entire object and positional information in the image capturing space (coordinates of each region, coordinates of the average of the entire point cloud or the center of gravity, coordinates of the maximum value and minimum value of each axis of X, Y, and Z). Although not included in the table in FIG. 3A, it may also be possible to further include color information (for example, texture image in which each pixel has color values of RGB) that is appended to the point cloud representing the three-dimensional shape.

FIG. 3C shows an example of the point cloud representing the three-dimensional shape of a person. As shown in an enlarged diagram 301 in FIG. 3C, a point cloud 300 representing the three-dimensional shape is a set of points each having, for example, an area of 1 mm square and the coordinates of all the points are recorded.

FIG. 3D and FIG. 3E show the way coordinates are stored for each region in the point cloud 300 representing the three-dimensional shape of the person shown in FIG. 3C. In FIG. 3D, circular marks 1 to 18 indicate each of a total of 18 regions, that is, head, neck, left and right shoulders, left and right elbows, left and right hands (from wrist to fingertip), chest, torso, left and right buttocks, left and right knees, left and right ankles, and left and right tiptoes. Further, the representative coordinates of each region are stored. Here, it may be possible to find the representative coordinates of each region by using an already-known method of estimating them from the point cloud of the entire object. Alternatively, it may also be possible to obtain the representative coordinates by installing a sensor at each region at the time of image capturing and measuring position coordinates by the sensor. The 18 regions shown in FIG. 3D and FIG. 3E are merely exemplary and all these regions of the object of the person are not necessarily required. Further, it may also be possible to provide a region other than those by dividing the hand into the wrist and the fingertip and so on.

By managing a foreground model by the data structure such as that described above, it is possible to read the shape data of the whole or a specific portion of a desired foreground object at any image capturing time from the database 103.

### (Virtual viewpoint information)

As described previously, the virtual viewpoint image is an image representing an appearance from a virtual camera (virtual viewpoint) that does not exist actually in the image capturing space. Consequently, for the generation of a virtual viewpoint image, virtual viewpoint information specifying the position, orientation, viewing angle, movement path (cameral path) and the like of a reference virtual camera.

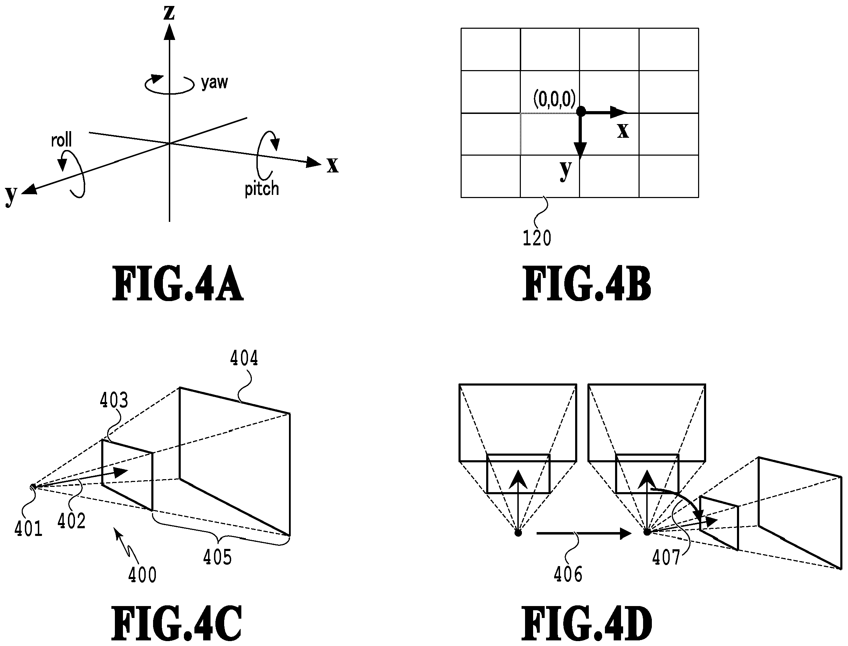

Normally, the position and orientation of a virtual camera are designated by using one coordinate system. FIG. 4A shows a general orthogonal coordinate system of a three-dimensional space consisting of three axes of X-axis, Y-axis, and Z-axis and by setting the orthogonal coordinate system such as this in the three-dimensional space including the image capturing target-stage, the position and orientation of a virtual camera are specified. FIG. 4B is an example of the orthogonal coordinate system that is set for the stage 120 in FIG. 1B and the center of the stage 120 is taken to be the origin (0, 0, 0), the long-side direction is taken to be the X-axis, the short-side direction is taken to be the Y-axis, and the vertical direction is taken to be the Z-axis. The setting method of an orthogonal coordinate system explained here is merely exemplary and not limited to this.

On a UI screen displaying the three-dimensional space as described above, a user sets a virtual camera by using, for example, 3-axis controller. FIG. 4C is a diagram explaining the position and orientation of the virtual camera and a vertex 401 of a quadrangular pyramid 400 indicates the position of the virtual camera and a vector 402 extending from the vertex 401 indicates the orientation of the virtual camera. The position of the virtual camera is represented by coordinates (x, y, z) in the three-dimensional space and the orientation is represented by a unit vector whose scalar is the component of each axis. Here, it is assumed that the vector 402 representing the orientation of the virtual camera passes through the center point of a front clip plane 403 and a rear clip plane 404. Further, a space 405 sandwiched by the front clip plane 403 and the rear clip plane 404 is called "viewing truncated pyramid of virtual camera" and forms the drawing range (projection range) of the virtual camera. The vector 402 representing the orientation of the virtual camera is also called (light axis vector of virtual camera".

FIG. 4D is a diagram explaining the movement and rotation of the virtual camera. In FIG. 4D, an arrow 406 indicates the movement of the position 401 of the virtual camera and is represented by the components (x, y, z) of each axis. Further, in FIG. 4D, an arrow 407 indicates the rotation of the virtual camera and is represented by yaw, rotation around the Z-axis, pitch, rotation around the X-axis, and roll, rotation around the Y-axis (see FIG. 4A). It is possible to freely move and rotate the virtual camera within the target three-dimensional space.

### (Generation processing of virtual viewpoint image)

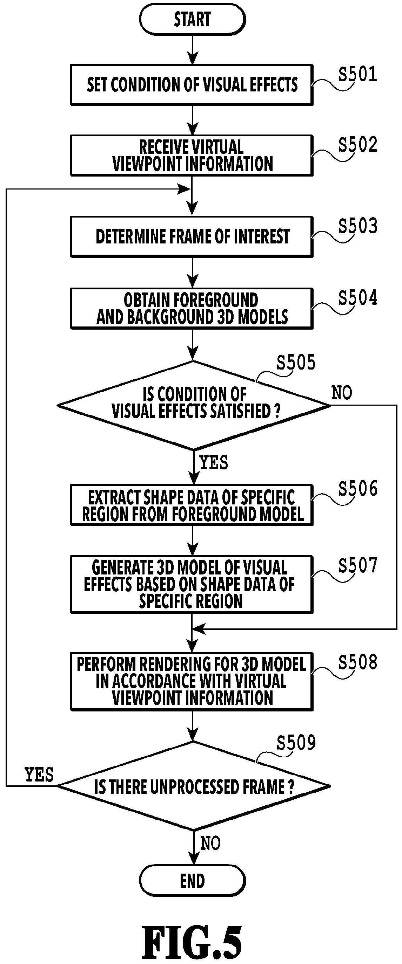

Next, processing to generate a virtual viewpoint image with visual effects according to the present embodiment is explained in detail with reference to the flowchart in FIG. 5. The series of processing shown in the flowchart in FIG. 5 starts its execution triggered by a user inputting instructions to start generation of a virtual viewpoint image based on the multi-viewpoint image taking a desired scene as a target from the operation input unit 214. Further, it is assumed that before the start of execution of this flow, a foreground model of the multi-viewpoint image, which is the source of the virtual viewpoint image, is generated and stored in advance in the database 103. In the following explanation, symbol "S" means a step.

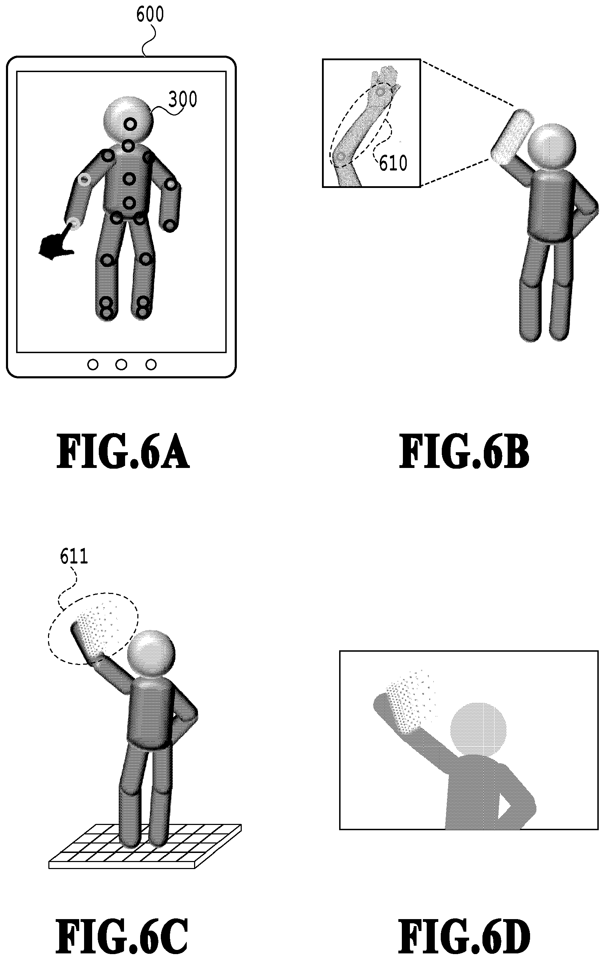

At S501, the condition setting unit 202 sets a condition relating to visual effects based on the user input. FIG. 6A is a diagram showing the way a user designates which portion of the object visual effects are appended to, subsequent to the designation to append visual effects on a tablet terminal 600 as the image processing terminal 104. Here, on a touch panel 601 of the tablet terminal 600, the point cloud 300 representing the three-dimensional shape of the person shown in FIG. 3D is displayed together with the marks indicating each region. It is possible for a user to select a specific region at which the user desires to cause visual effects to occur by tapping a portion in the vicinity of the mark indicating the desired region on the touch panel 601. In the example in FIG. 6A, by the user tapping the right wrist and the right elbow, the marks corresponding to the regions are highlighted. In this case, the portion from the right elbow to the right hand (including fingertip) is selected. In a case where a plurality of objects exists, it may also be possible to set each different specific region for each object or it may also be possible to set common specific regions en bloc. It may also be possible to design the configuration so that it is made possible to change the condition that is set here while all the frames are processed.

At S502, the virtual viewpoint reception unit 204 receives virtual viewpoint information from a virtual viewpoint setting device, not shown schematically.

At S503, in accordance with a time code specifying a target frame, which is included in the virtual viewpoint information received at S502, a frame of interest is determined from among frames configuring a source multi-viewpoint image. In this case, it may also be possible to take a frame as the frame of interest in order from the start frame for generating a virtual viewpoint image, or in order form the last frame.

At S504, the data obtaining unit 201 designates the time code of the frame of interest determined at S503 and obtains the foreground model in the frame of interest by receiving it from the database 103. Further, the data obtaining unit 201also obtains the background model by reading it from an HDD or the like, not shown schematically.

At S505, the processing is branched in accordance with whether the condition of visual effects, which is set at S501, is satisfied. In a case where the condition of visual effects is satisfied, the processing advances to S506 and in a case where the condition is not satisfied, the processing advances to S508. In a case of the present embodiment, on a condition that the visual effects are caused to occur and the specific region is set, the processing advances to S506.

At S506, the visual effects generation unit 203 extracts the three-dimensional shape data corresponding to the specific region that is set at S501 from the foreground model obtained at S504. As explained already, in the database 103, the coordinates of the entire point cloud representing the three-dimensional shape of the foreground object and the coordinates of each main region are recorded in association with the time code. Consequently, based on the coordinates of the specific region, the point cloud corresponding to the specific region is extracted. FIG. 6B shows the point cloud that is extracted in a case where the right hand (including fingertip) and the right elbow are designated as the specific regions for the point cloud 300 representing the three-dimensional shape of the person, which is taken as the example in FIG. 6A. In this case, an entire point cloud 610 existing between the coordinates of the right elbow and the coordinates of the right hand (including fingertip) is extracted. At this time, it may also be possible to extract the point cloud in a range a bid wider by giving a predetermined margin to the range included between both the coordinates of the specific regions. Further, in a case where only one specific region is designated (for example, only the right hand (including fingertip) is designated, and the like), it is sufficient to extract the point cloud in a range determined in advance with the coordinates of the region being taken as the center.

At S507, the visual effects generation unit 203 generates a visual effects model based on the three-dimensional shape data corresponding to the specific region, which is extracted at S506. FIG. 6C is an example in a case where a visual effects model of "trace" is generated based on the point cloud 610 of the portion beyond the right elbow, which is extracted as the three-dimensional shape data corresponding to the specific region. In a case where the person is swinging the right arm during a predetermined time (for example, 1 sec.) that is set as a condition, a point cloud 611 as shown in FIG. 6C, which represents the locus of the right arm, is generated as a visual effects model in each frame during the predetermined time. As described above, the visual effects model is generated in the same data format as that of the foreground model and in a case where the foreground model is in the point cloud format, the visual effects model is also generated in the point cloud format. Then, each point configuring the point cloud as the visual effects model has three-dimensional coordinates. It may also be possible to further generate a visual effects model in a predetermined number of frames, whose amount of point cloud is reduced stepwise so that the visual effects gradually disappear over time in a plurality of subsequent frames, in place of immediately stopping the generation of the visual effects model after a predetermined time elapses.

At S508, the rendering unit 205 generates a virtual viewpoint image in accordance with the virtual viewpoint information received at S502 by performing rendering processing using the foreground model and the background model, and further the visual effects model generated in accordance with the condition. At this time, the visual effects model is generated also in the same data format (here, point cloud format) as that of the foreground model and the background model, and therefore, like the three-dimensional shape of the object of the foreground or the background, the visual effects model is projected onto the virtual camera specified by the virtual viewpoint information. FIG. 6D shows an example of a virtual viewpoint image to which the visual effects of "trace" shown in FIG.6C is appended. Each component of the visual effects model has three-dimensional position information and can be handled like the foreground model and the background model. Because of this, it is possible to draw the visual effects model by projecting it onto the virtual viewpoint having arbitrary position and orientation within the virtual space.

At S509, whether or not all the target frames are processed in accordance with the time code included in the virtual viewpoint information. In a case where there is an unprocessed frame, the processing returns to S503, and the next frame of interest is determined and the processing is continued. In a case where all the target frames are processed, this flow is terminated.

The above is the contents of the processing to generate a virtual viewpoint image with visual effects according to the present embodiment. In a case where image capturing of a multi-viewpoint image and generation of a foreground model are performed real time, it is also made possible to generate a visual effects model real time. That is, it is possible to generate a virtual viewpoint image with visual effects real time by generating a visual effects model real time based on a foreground model generated from a multi-viewpoint image obtained by performing image capturing real time.

As above, according to the present embodiment, it is possible to appropriately append three-dimensional visual effects to a specific region of an object or a potion on the periphery thereof and it is made possible to generate a virtual viewpoint image that attracts the interest of a viewer more.

### [Second Embodiment]

In the first embodiment, as the condition of visual effects, a specific region of a foreground object is set in advance and shape data corresponding to the specific region is extracted from a foreground model, and then a visual effects model is generated. Next, an aspect is explained as a second embodiment in which as the condition of visual effects, a specific orientation of a foreground object is set in advance and a visual effects model in accordance with the specific orientation is generated. Explanation of the contents common to those of the first embodiment, such as the system configuration and the virtual viewpoint image generation flow, is omitted and in the following, different points are explained mainly.

### (Condition setting of visual effects)

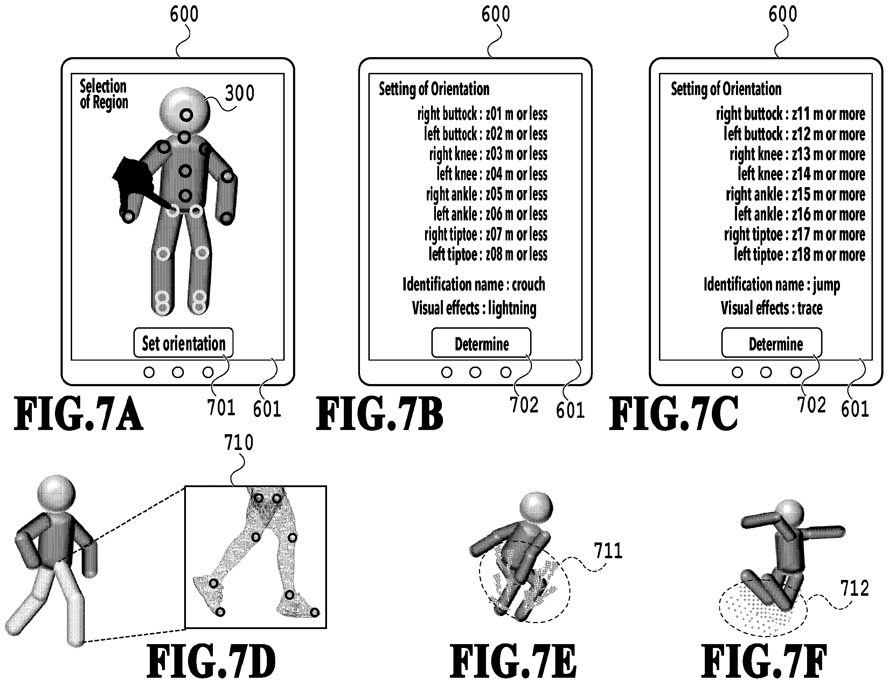

FIG. 7A is a diagram showing the way a user designates a specific orientation on the above-described tablet terminal 600 subsequent to appending of visual effects and setting of a specific region according to the present embodiment. First, a user selects a plurality of specific regions relating to a desired orientation by the same method as that explained in FIG. 6A described previously. FIG. 7A shows the way a user selects specific regions in a case where the orientation at the time of a person crouching or jumping is designated as a condition. In the example in FIG. 7A, each region of the left and right buttocks, left and right knees, left and right ankles, and left and right tiptoes is tapped and the corresponding marks are highlighted. A user having selected these specific regions next taps a "Set orientation" button 701 on the touch panel 601. On the UI screen after transition, a user defines a desired orientation by inputting positional conditions and the like for implementing the desired orientation for each of the regions selected on the UI screen before transition. FIG. 7B shows input contents in a case where the orientation at the time of crouching is designated as the condition and FIG. 7C shows input contents in a case where the orientation at the time of jumping is designated as the condition. In the example in FIG. 7B in a case where the orientation at the time of crouching is designated, as the positional relationship of each specific region, the values in the Z-axis direction are input, each value being less than or equal to a predetermined value. Then, as the identification name of the orientation to be defined, "crouch" is designated. Further, in the example in FIG. 7C in a case where the orientation at the time of jumping is designated, as the positional relationship of each specific region, the values in the Z-axis direction are input, each value being larger than or equal to a predetermined value. Then, as the identification name of the orientation to be defined, "jump" is designated. By setting the height (value of Z-axis) of each specific region in accordance with the desired orientation after selecting the specific regions belonging to the lower half of the body, it is made possible to determine whether the foreground model of a person corresponds to the specific orientation, such as "crouch" and "jump". A user having input the positional relationship of the specific regions corresponding to the specific orientation subsequently designates the type of visual effects for the specific orientation. A configuration may be accepted in which the type of visual effects is designated by, for example, selecting it from a list (not shown schematically) prepared in advance. Here, in the example in FIG. 7B, "lightning" is designated and in the example in FIG. 7C, "trace" is designated.

Then, in a case where a "Determine" button 702 is tapped in the state where the specific regions relating to the specific orientation are selected and the positional relationship of the selected specific regions, the identification name of the orientation, and the type of visual effects are input, the input contents are determined as the condition of the visual effects. In this manner, by designating the positional relationship of specific regions after selecting the specific regions, it is possible to set an arbitrary orientation as the condition of visual effects.

### (Generation of visual effects model)

In a case of the present embodiment, in the determination processing at S505 described previously, provided that it is checked that the visual effects are caused to occur and the three-dimensional shape represented by the foreground model of the processingtarget object matches the specific orientation, the processing advances to S506. It is possible to determine whether or not the three-dimensional shape matches the specific orientation by obtaining the coordinates of the specific regions configuring the specific orientation among each of the regions of the foreground model obtained at S504 and collating the coordinates with the positional relationship of the coordinates of each specific region, which are set as the condition of the visual effects. In a case where the determination results indicate that the condition of the visual effects is satisfied, at S506, the three-dimensional shape data corresponding to the specific regions configuring the specific orientation is extracted based on the coordinates of the specific regions. In a case where each region belonging to the lower half of the body is selected as the specific region as in the example in FIG. 7A, as shown in FIG. 7D, among the point cloud 300, a point could 710 of all points existing in the portion from the right buttock up to the right tiptoe and in the portion from the left buttock up to the left tiptoe is extracted.

Then, at S507, based on the three-dimensional shape data corresponding to the specific orientation, which is obtained at S506, a visual effects model is generated. FIG. 7E is a visual effects model of "lightning" for the crouching orientation, which is generated in accordance with the condition shown in FIG. 7B. In each frame during a predetermined period of time set by the condition of the visual effects, a point cloud 711 imitating light extending from the toes in a predetermined direction is generated. By the visual effects model such as this, it is possible to emphasize the powerfulness in a case where a person crouches in a virtual viewpoint image in an easy-to-see manner. Further, FIG. 7F is a visual effects model of "trace" for the jumping orientation, which is generated in accordance with the condition shown in FIG. 7C. A point cloud 712 representing the locus of the lower half of the body during a predetermined period of time (for example, 1sec.) set by the condition of the visual effects is generated in each frame during the predetermined period of time. By the visual effects model such as this, it is possible to emphasize the dynamic motion in a case where a person jumps in a virtual viewpoint image in an easy-to-see manner.

As above, by setting the specific orientation of a person as the condition of visual effects, it is possible to generate a visual effects model emphasizing that a person takes a specific orientation.

### [Third Embodiment]

Next, an aspect is explained as a third embodiment in which contact between a specific foreground object and another object is set as the condition of visual effects and a visual effects model in accordance with the contact is generated. Explanation of the contents common to those of the first and second embodiments, such as the system configuration and the virtual viewpoint image generation flow, is omitted and in the following, different points are explained mainly.

### (Condition setting of visual effects)

### <Contact between foreground object and background object>

As a case corresponding to this type of contact, for example, mention is made of the instant of a dunk shot at which the hand of a basketball player comes into contact with the basket ring, and the like.

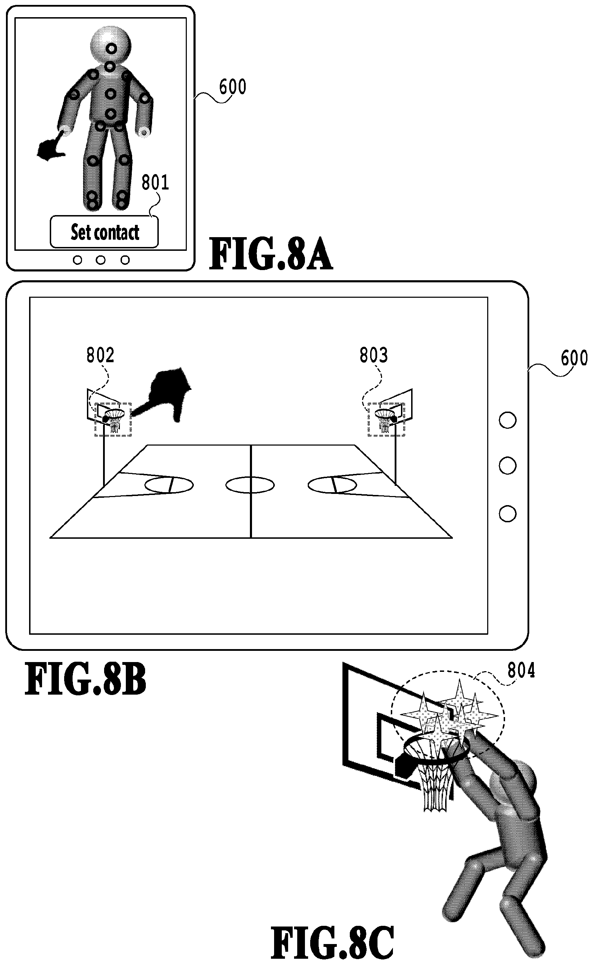

In a case where a visual effects model is generated by taking a dunk shot as a target, specific portions are set for each of the player as the foreground object and the basket ring as the background object. At this time, in a case of a team sports, such as basketball, a plurality of players as the foreground object may exist in each frame. In this case, it is possible to set specific regions common to all the players en bloc. FIG. 8A is a diagram showing the way a user further selects, on the above-described tablet terminal 600, specific areas of the background object after selecting specific regions of the foreground object following the selection of appending visual effects. First, a user selects the "left and right hands" that are regions at which contact occurs among each region of the player (person) by the same method as that explained in FIG. 6A described previously. As shown in FIG. 8A, in a case where a user taps the left and right hands of the player, the corresponding marks are highlighted. After selecting the specific regions of the player, at which contact occurs, next, a user taps a "Set contact" button 801 on the touch panel 601. Then, a user selects areas 802 and 803 of the basket rings, which are targets of contact, by surrounding them by, for example, the drag operation and the like on the UI screen after transition as shown in FIG. 8B. As described above, specific portions (specific regions/specific areas) of each of the player as the foreground object and the basket ring as the background object are set. Due to this, it is made possible to detect whether the foreground object in a certain frame represents the three-dimensional shape of the instant at which the player makes a dunk shot.

Then, it is sufficient for a user having set the specific portions (specific regions/specific areas) for both the foreground object and the background object to designate the type of visual effects caused to occur as in the case of the second embodiment. The designation method at this time is the same as that in the case of the second embodiment, and therefore, explanation is omitted. Then, in a case where a "Determine" button 902 is tapped in the state where the necessary input is completed, the input contents are determined as the condition of the visual effects.

### <Contact between foreground objects>

As a case corresponding to this type of contact, for example, mention is made of a scene in which players give offense and make defense continuously as in a match, such as karate, and the like. Here, weighting to adjust the level of visual effects is also explained.

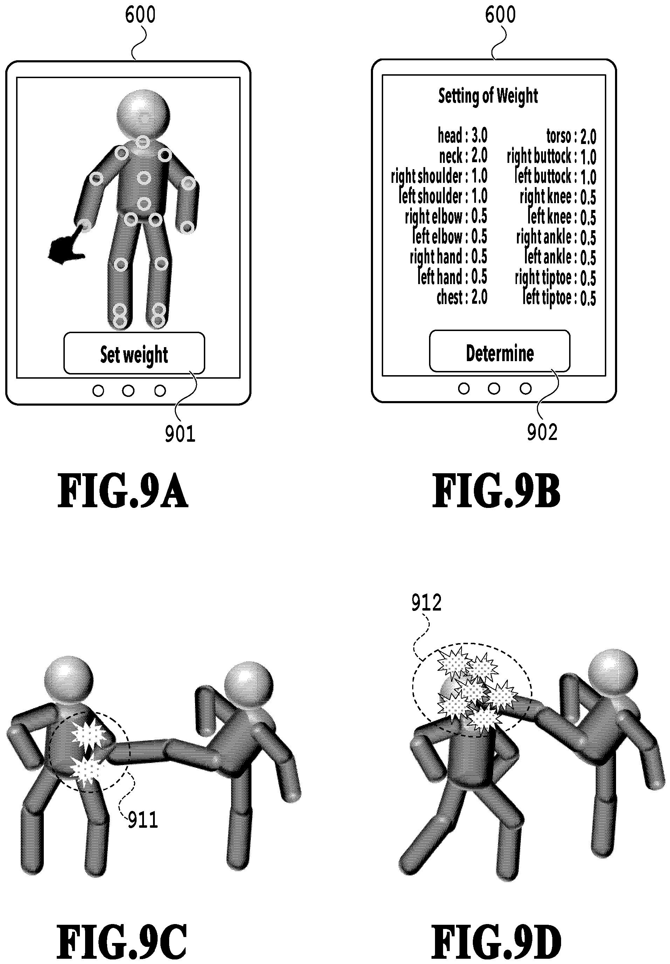

In a case of a fighting sports, such as a karate, it is also possible to set specific regions common to each player en bloc. FIG. 9A is a diagram showing the way a user designates, on the above-described tablet terminal 600, specific regions for a player following the selection of appending visual effects. First, a user selects regions at which contact occurs for the player as the foreground object by the same method as that explained in FIG. 6A described previously. In the example in FIG. 9A, all the regions configuring the person are tapped, and therefore, all marks are highlighted. In this example, a user having completed the selection of specific regions next taps a "Set weight" button 901 on the touch panel 601. Then, a user inputs a weight value of each specific region on the UI screen after transition as shown in FIG. 9B. In the example in FIG. 9B, with the weight value at the normal level being taken as "1.0", "3.0" is designated for the head and "2.0" is designated for the neck, chest, and torso, which is larger than the value at the normal level. Then, for the left and right shoulders and the left and right buttocks, "1.0" at the normal level is designated. Further, for the left and right elbows, the left and right hands, the left and right ankles, and the left and right tiptoes, "0.5" smaller than the value at the normal level is designated. A user having selected specific regions and input the weight value for each specific region designates the type of visual effects to be appended as in the case of the second embodiment (not shown schematically). The designation method at this time is the same as that in the case of the second embodiment, and therefore, explanation is omitted.

Then, in a case where the "Determine" button 902 is tapped in the state where the necessary input is completed, such as the weight value for each specific region and the type of visual effects, the input contents are determined as the condition of the visual effects.

### (Generation of visual effects model)

In a case of the present embodiment, in the determination processing at S505 described previously, on a condition that the visual effects are caused to occur and the specific portion of the target object is in contact with the specific portion of another object, the processing advances to S506. It may be possible to determine the presence/absence of contact by applying a publicly known technique. For example, it may also be possible to obtain the coordinates of the specific region from the foreground model obtained at S504 and determine whether the coordinates hit the bounding box of the specific area (for example, basket ring) of another object, which is the target of contact. In a case where the determination results indicates the presence of contact, at S506, the three-dimensional shape data corresponding to the specific portion at which the contact occurs is extracted from the foreground model obtained at S504 based on the coordinates of the specific region. Then, at S507, based on the three-dimensional shape data corresponding to the specific portions, which is obtained at S506, a visual effects model is generated.

FIG. 8C shows a visual effects model that is generated in a case where the hands of a player as the foreground model come into contact with the basket ring as the background model based on the condition of the visual effects explained in FIG. 8A and FIG. 8B. In this case, in each frame corresponding to the predetermined time designated in the condition, a point cloud 804 in which stars turns on and off repeatedly at regular intervals is generated in the vicinity of both hands of the player. By appending the visual effects such as those, it is possible to effectively direct a dunk shot, which is one of highlight scenes of basketball.

FIG. 9C and FIG. 9D each show a visual effects model that is generated in a case where players as the foreground model come into contact with each other based on the condition of the visual effects explained in FIG. 9A and FIG. 9B. In each case of FIG. 9C and FIG. 9D, in each frame corresponding to the predetermined time designated in the condition, a point cloud representing suffered damage is generated in the vicinity of the region at which the contact occurs. At this time, in the example in FIG. 9C in which the contact portions are the left elbow and the left hand, the weight values are smaller than that at the normal level, and therefore, the amount of a point cloud 911 that is generated is small. In contrast to this, in the example in FIG. 9D in which the contact portion is the head, the weight value is larger than that at the normal level, and therefore, the amount of a point cloud 912 that is generated is large. As described above, it may also be possible to set weighting as a condition and change the scale of the visual effects model in accordance with the weight value. Due to this, it is possible to direct the defense of a player against an attack by generating small-scale visual effects although contact has occurred, direct an effective attack by generating large-scale visual effects, and so on. For the level adjustment by the weight value of the visual effects model, for example, in a case of the visual effects, such as "lightning" and "star", it is sufficient to prepare in advance point clouds whose size and amount are different in association with each level. Further, in a case of the visual effects of "trace", for example, it may also be possible to implement level adjustment by thinning unit elements on a condition that the weight value is small, extracting unit elements from a wider range on a condition that the weight value is large, and so on, at the time of extracting the shape data corresponding to the specific regions.

As above, it is possible to generate a visual effects model that emphasizes contact by setting contact between objects as the condition of visual effects. Further, by adding weighting to the condition of visual effects, it is possible to adjust the magnitude of visual effects in accordance with the specific portion at the time of contact.

### [Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

According to the present disclosure, it is possible to appropriately append visual effects for an object in a virtual viewpoint image.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

In a virtual viewpoint image, visual effects for an object are appended appropriately. Based on shape data indicating a three-dimensional shape of a foreground object captured in a plurality of images which are based on image capturing of a plurality of imaging devices, effects data indicating three-dimensional visual effects in accordance with a specific portion in the three-dimensional shape is generated (203). Then, by using the shape data and the effects data, a virtual viewpoint image corresponding to a virtual viewpoint is generated (205).

## Claims

1. An image processing apparatus (104) comprising:
an obtaining means (201) for obtaining shape data indicating a three-dimensional shape of a foreground object captured in a plurality of images which are based on image capturing of a plurality of imaging devices;
an effects generation means (203) for generating effects data indicating three-dimensional visual effects in accordance with a specific portion in the three-dimensional shape indicated by the obtained shape data; and
an image generation means (205) for generating a virtual viewpoint image corresponding to a virtual viewpoint by using the shape data and the effects data.

2. The image processing apparatus according to claim 1, wherein
the three-dimensional visual effects are direction to emphasize an movement of the foreground object, in which an appearance in the virtual viewpoint image changes in accordance with a change of the virtual viewpoint.

3. The image processing apparatus according to claim 2, wherein
a data format of the shape data is one of a point cloud format in which points are components, a mesh format in which polygons are components, and a voxel format in which voxels are components,
the specific portion is represented by a set of the components, and
the effects generation means generates the effects data in the same data format as the data format of the shape data.

4. The image processing apparatus according to claim 3, further comprising:
a setting means for setting a condition relating to the three-dimensional visual effects, wherein
the effects generation means generates the effects data in accordance with the condition set by the setting means.

5. The image processing apparatus according to claim 4, wherein
the setting means sets the condition based on user instructions relating to a three-dimensional shape indicated by the shape data.

6. The image processing apparatus according to claim 5, wherein
the setting means sets, as the condition, a portion selected by a user from each portion of a three-dimensional shape indicated by the shape data as the specific portion.

7. The image processing apparatus according to claim 6, wherein
the effects generation means generates the effects data based on shape data of part of the shape data, which corresponds to the specific portion included in the condition.

8. The image processing apparatus according to claim 7, wherein
the setting means sets, as the condition, a weight for each of the specific portions and
the effects generation means generates the effects data in accordance with the weight included in the condition.

9. The image processing apparatus according to claim 4, wherein
the foreground object is a person and
the setting means sets, as the condition, an orientation of the person based on the specific portion.

10. The image processing apparatus according to claim 9, wherein
in a case where a three-dimensional shape indicated by the shape data matches the orientation of the person included in the condition, the effects generation means generates the effects data based on shape data of part of the shape data, which corresponds to the specific portion relating to the orientation.

11. The image processing apparatus according to claim 4, wherein
the setting means sets, as the condition, the foreground object and a background object coming into contact with each other, a portion selected by a user from each portion of a three-dimensional shape indicated by the shape data, which is the specific portion, and an area of a background object, which may come into contact with the selected portion.

12. The image processing apparatus according to claim 11, wherein
in a case where the contact included in the condition is detected, the effects generation means generates the effects data based on shape data of part of the shape data, which corresponds to the contact.

13. The image processing apparatus according to any one of claims 1 to 12, further comprising:
a reception means for receiving virtual viewpoint information specifying the virtual viewpoint, wherein
the image generation means generates the virtual viewpoint image in accordance with the virtual viewpoint information.

14. An image processing method comprising:
an obtaining step of obtaining shape data indicating a three-dimensional shape of a foreground object captured in a plurality of images which are based on image capturing of a plurality of imaging devices;
an effects generation step of generating effects data indicating three-dimensional visual effects in accordance with a specific portion in the three-dimensional shape indicated by the obtained shape data; and
an image generation step of generating a virtual viewpoint image corresponding to a virtual viewpoint by using the shape data and the effects data.

15. A program for causing a computer to perform the image processing method according to claim 14.
